Europäisches Patentamt

European Patent Office

Office européen des brevets

(19)

(11) Veröffentlichungsnummer: **0 008 745**
**B1**

(12) **EUROPÄISCHE PATENTSCHRIFT**

(45) Veröffentlichungstag der Patentschrift: **28.04.82**

(21) Anmeldenummer: **79103091.9**

(22) Anmeldetag: **22.08.79**

(51) Int. Cl.³: **B 01 J 21/06,**
**B 01 J 27/22, C 01 B 3/40**

(54) **Trägerloser Metallkatalysator zur russfreien partiellen Oxidation von flüssigen Kohlenwasserstoffen mit Luft.**

(30) Priorität: **30.08.78 DE 2837850**

(43) Veröffentlichungstag der Anmeldung:
**19.03.80 Patentblatt 80/6**

(45) Bekanntmachung des Hinweises auf die Patenterteilung:
**28.04.82 Patentblatt 82/17**

(84) Benannte Vertragsstaaten:
**AT BE CH FR GB IT NL SE**

(56) Entgegenhaltungen:
**DE - A - 2 103 008**
**DE - A - 2 614 838**
**DE - A - 2 709 358**
**US - A - 2 804 433**

(73) Patentinhaber: **SIEMENS AKTIENGESELLSCHAFT**
**Berlin und München**
**ostfach 22 02 61**
**D-8000 München 22 (DE)**

(72) Erfinder: **Kostka, Hana**
**Steigbeetstrasse 12**
**D-8500 Nürnberg (DE)**

Courier Press, Leamington Spa, England.

# Trägerloser Metallkatalysator zur rußfreien partiellen Oxidation von flüssigen Kohlenwasserstoffen mit Luft

Die Erfindung betrifft einen trägerlosen Metallkatalysator zur rußfreien Erzeugung eines Kohlenmonoxid, Wasserstoff und niedrige Kohlenwasserstoffe enthaltenden Brenngasgemisches durch partielle Oxidation von flüssigen Kohlenwasserstoffen mit Luft bei Temperaturen zwischen 600 und 800°C.

Es ist seit langem bekannt, daß Metallkörper aus Platin mit einer großen Oberfläche als Katalysatoren für verschiedene Umsetzungen verwendet werden können. So ist es z.B. aus DE—A—21 03 008 bekannt, einen porösen Körper aus Platin oder Nickel (z.B. Nickelschwamm) auf eine erhöhte Temperatur aufzuheizen und an diesem Katalysator flüssige Kohlenwasserstoffe und ein sauerstoffhaltiges Gas, das Luft, Abgas oder ein Luft/Abgas-Gemisch sein kann, umzusetzen. Dabei entsteht ein Gasgemisch, das Wasserstoff, Kohlenmonoxid, Methan und gewisse Beimischungen von niedrigen Kohlenwasserstoffe, d.h. Kohlenwasserstoffe mit höchstens 4 Kohlenstoffatomen pro Molekül, enthält. Dieses Gasgemisch wird mit weiterer Luft vermischt und in einer nachgeschalteten Brennkraftmaschine verbrannt. Auch aus DE—B—27 06 679 ist eine Vorrichtung zur Zersetzung flüssiger Treibstoffe in ein Treibgas bekannt, bei dem der flüssige Treibstoff, z.B. Hydrazin oder Kohlenwasserstoffe, gegebenenfalls mit Luft vermischt über einen aufheizbaren porösen Körper aus Metallschaum geleitet wird. Die bei diesen Umsetzungen entstehenden Gasgemische können besonders vorteilhaft zum Betrieb von Verbrennungseinrichtungen, z.B. Brennkraftmaschinen oder Brennern, verwendet werden. Sie sind aber auch zur Wasserstofferzeugung oder zur Erzeugung von Gasgemischen bestimmter Zusammensetzung, z.B. Reduktionsgase, für verschiedene technische Anwendungen, z.B. metallurgische Prozesse, geeignet.

Für den Großeinsatz scheiden Platinkatalysatoren wegen ihrer geringen Verfügbarkeit (hoher Preis) aus. Nickel oder nickelhaltige Metallegierungen neigen bei der partiellen Oxidation von Kohlenwasserstoffen unter starken Luftmangel zur Rußbildung. In Gasgemischen, die durch Oxidation von Kohlenwasserstoffen mit Luft bei geringen Luftzahlen entstanden sind, liegt im thermodynamischen Gleichgewicht nämlich ein Teil des Kohlenstoffes in Form von Ruß vor. Unter der Luftzahl ist dabei das Verhältnis der tatsächlich eingesetzten Luftmenge zu der Luftmenge, die zur stöchiometrischen Verbrennung des eingesetzten Kohlenwasserstoffes nötig ist, zu verstehen. Bei Luftzahlen unter etwa 0,3 wird bei einer Reaktion, die bis zum thermodynamischen Gleichgewicht führt, immer Ruß erzeugt. Rußabscheidungen führen aber nicht nur bei der Verwendung des entstehenden Gasgemisches, z.B. in Brennkraftmaschinen oder Brennern, zu Betriebsstörungen, vielmehr werden die Katalysatoren selbst durch den Ruß verunreinigt und in ihrer Aktivität zunehmend herabgesetzt. Man benötigt daher für viele Zwecke einen Katalysator, der auch bei geringen Luftzahlen, z.B. zwischen 0,07 und 0,25, abseits des thermodynamischen Gleichgewischtes ein rußfreies Produktgas liefert. Dieser Katalysator soll ferner auch durch Verunreinigungen der eingesetzten Kohlenwasserstoffe, insbesondere Schwefel, nicht inaktiviert werden.

Es sind eine Vielzahl von Katalysatoren bekannt, bei denen auf einen keramischen Träger Metalle, meist in Form von Metalloxiden, als aktive Komponenten aufgebracht sind. Die keramischen Träger enthalten dabei meist Aluminiumoxid, das in verschiedenen Modifikationen vorliegen kann. Die thermisch instabilen, Modifikationen des $Al_2O_3$ zeichnen sich dadurch aus, daß sie selbst bereits aufgrund ihrer Kristallstruktur viele aktive Zentren besitzen, so daß diese Modifikationen bereits selbst katalytische aktiv sind und die Aktivität aufgebrachter katalytischer Komponenten wirkungsvoll unterstützen. Bei den auftretenden erhöhten Betriebstemperaturen gehen diese Modifikationen jedoch in $\alpha$-$Al_2O_3$ über, das keine nennenswerte Aktivität besitzt. Derartige Katalysatoren mit $Al_2O_3$-haltigen Trägern sind daher temperaturempfindlich. Außerdem besteht die Gefahr, daß die Aktivität derartiger Katalysatoren zerstört wird, wenn sie in heißem Zustand einem Luftüberschuß ausgesetzt werden, z.B. bei Lufteinbrüchen oder beim Abstellen des Katalysators.

Außerdem müssen die Träger derartiger Katalysatoren eine hochporöse Struktur aufweisen, um das Aufbringen der katalytischen Komponenten in ausreichendem Maße zu ermöglichen und eine hohe Oberfläche zur Verfügung zu stellen. Dies bedeutet gleichzeitig eine Herabsetzung der thermischen Leitfähigkeit. Eine hohe Leitfähigkeit ist jedoch für eine betriebssichere, zuverlässige Verfahrensführung vorteilhalt. Ferner neigen auch derartige Katalysatoren zur Rußbildung wenn der Brennstoff in flüssiger Form auf den heißen Katalysator trifft; der flüssige Brennstoff muß also vorher sorgfältig verdampft oder vernebelt werden.

Der Erfindung liegt die Aufgabe zugrunde, einen trägerlosen Metallkatalysator für die partielle Oxidation von flüssigen Kohlenwasserstoffen bei erhöhten Temperaturen zur Verfügung zu stellen, der eine hohe Wärmeleitfähigkeit hat, eine hohe thermische und mechanische Stabilität besitzt, dessen Aktivität auch bei langen Betriebszeiten nicht absinkt und der gegenüber Verunreinigungen des Kohlenwasserstoffes (z.B. durch Schwefel oder Metalle), Lufteinbrüchen und Kontakt mit flüssigem Brennstoff weitgehend unempfindlich ist.

Diese Aufgabe wird gemäß der Erfindung dadurch gelöst, daß eine Aluminiumlegierung mit 15 bis 35 Gew.-% Silizium, vorteilhaft 20 bis 25 Gew.-%, zu Formkörpern verarbeitet und in einer Wärmebehandlung mindestens 10 Stunden lang bei Temperaturen zwischen 600 und 800°C einer oxidierenden Atmosphäre zur Überführung von 5—30% des vorhandenen Aluminiums in $\alpha$-Al$_2$O$_3$ und gasförmigen oder gergasten Kohlenwasserstoffen zur Überführung von 1—10% des Siliziums in $\beta$-SiC ausgesetzt wird. Vorteilhaft werden die Formkörper einem Gasstrom aus Kohlenwasserstoffen und Luft mit einem C:O$_2$-Verhältnis zwischen 2 und 8 (z.B. pro C$_8$H$_{16}$-Molekül 2,5 bis 8 O$_2$-Moleküle), insbesondere einem C:O$_2$-Verhältnis zwischen 4 und 6,5, ausgesetzt.

Aluminium und Silizium sind in festem Zustand nur begrenzt ineinander löslich. Die Löslichkeit des Siliziums in Aluminium beträgt bei Raumtemperatur weniger als 0,5 Gew.-%, so daß bei höheren Silizium-gehalten eine Aluminiumphase neben einer Siliziumphase vorliegt. Die beiden Phasen bilden bei einem Si-Gehalt von etwa 11,7 Gew.-% ein Eutektikum (Schmelzpunkt 577°C), das als feine Verteilung der beiden Phasen ineinander (grobkristallines Gemenge) vorliegt.

Gemäß der Erfindung wird von einer Aluminiumlegierung 'mit übereutektischem Si-Gehalt ausgegangen. Ein Schliff durch einen derartigen Metallkörper zeigt dann eine Grundmasse aus Al/Si-Eutektikum, in das in Form von Nadeln oder Balken eine Primärphase aus Silizium eingelagert ist. Derartige Al-Si-Legierungen sind Als Werkstoffe, z.B. für Gehäuse von Kolbenmotoren, bekannt (DE—A—23 45 127). Entsprechend der Reinheit derartiger handelsüblicher Werkstoffe können noch Spuren von Verunreinigungen, z.B. Fe, Ti, V, Ni oder Mn, im Werkstoff fein verteilt sein. Diese Verunreinigungen können derart fein im Gefüge verteilt sein, daß sie nur noch auf chemischem Wege als Spuren nachweisbar sind, sie können aber auch als vereinzelte Einlagerungen, z.B. als Al$_9$Fe$_2$Si$_2$ im Falle einer Verunreinigung mit Fe, im Schliff nachweisbar sein. Im allgemeinen beträgt der Gehalt handelsüblicher Werkstoffe an Verunreinigungen weniger als 1 Gew.-%, höchstens 3 Gew.-%. Diese Reinheit ist ausreichend.

Die katalytischen Formkörper können aus einer handelsüblichen Legierung, die aus einem derartigen Al-Si-Eutektikum mit Si-Primärphase besteht, hergestellt werden. Dies kann z.B. durch Zerkleinern eines Gußstückes der Legierung geschehen. Es kann aber auch ein Legierungspulver dieser Legierung mit Schmier- und Gleitmitteln vermischt und zur gewünschten Form, z.B. zu Tabeletten, verpreßt werden. Die Formkörper werden bei 600 bis 800°C einerseits einer oxidierenden Atmosphäre andererseits gasförmigen Kohlenwasserstoffen ausgesetzt. Dies kann zwar grundsätzlich in getrennten Schritten erfolgen, vorteilhaft wird jedoch eine Schritten erfolgen, vorteilhaft wird jedoch eine gemeinsame Wärmebehandlung in einem Gasstrom vorgenommen, der aus Kohlenwasserstoffen und Luft besteht. Am einfachsten wird ein Gasstrom eingesetzt, wie er bei der zu katalysierenden Umsetzung selbst entsteht. Das Verhältnis von Kohlenwasserstoffen zu Luft wird vorteilhaft so gewält, daß pro O$_2$-Molekül 2 bis 8 (vorzugsweise 4 bis 6,5) umzusetzende C-Atome vorhanden sind.

Durch die Wärmebehandlung werden 5 bis 30% des vorhandenen Aluminiums in $\alpha$-Al$_2$O$_3$ und 1 bis 10% des Siliziums in $\beta$-Sic übergeführt. Ein geringer, im Schliff nicht nachweisbarer Anteil des Siliziums ist auch in·Siliziumnitrid überführt. Nicht nachweisbar sind Siliziumoxide, Aluminiumkarbide, Aluminiumsilikate, Aluminiumsiliziumkarbide und Schwefelverbindungen.

·Die Bildung von Al$_2$O$_3$ und SiC ist mit einer Gewichtszunahme verbunden, die in geringem Maß auch auf eine spurenweise Bildung von Ruß zurückzuführen ist. Dieser kann durch Abbrennen nachgewiesen werden, ist jedoch in Hohlräumen des Materials abgelagert, ohne sichtbar zu sein. Der Rußgehalt beträgt weniger als etwa 3 Gew.-% des Gesamtgewichts des Katalysators. Nach langen Betriebsdauern (über 2000 Stunden) konnte darüber hinaus praktisch keine weitere Gewichtszunahme und keine weitere Rußbildung beobachtet werden. Sofern schwefelhaltige Kohlenwasserstoffe versendet werden, zeigt sich analog zur Rußbildung eine gewisse Adsorption des Schwefels, die jedoch ebenfalls keine Beeinträchtigung der katalytischen Aktivität zeigt und auch bei langen Betriebsdauern einen sehr geringen Schwellwert nicht überschreitet.

Überraschenderweise wid durch eine Vergrößerung der Porosität (Oberfläche) der Katalysator-Formkörper keine wesentliche Aktivitätszunahme erreicht. Es ist daher zur Erzielung einer hohen Aktivität nicht erforderlich, die Oberfläche von Katalysatoren, die durch Zerkleinern eines Gußstückes hergestellt sind, über den bei der Herstellung naturgemäß anfallenden Wert von z.B. 0,03 bis 0,2 m$^2$/g durch besondere Herstellungsschritte zu erhöhen.

Die hohe Aktivität des Katalysators nach der Erfindung ist sehr überraschend, da bekannte Katalysatoren aus $\alpha$-Al$_2$O$_3$ oder eine Aluminium/Silizium-Keramik keine nennenswerte Aktivität aufweisen, sondern nur als Träger für andere Komponenten verwendet werden.

Eine AlSi-Legierung erscheint ferner als Katalysator für die angegebene Reaktion ungeeignet, da der Schmelzpunkt des Eutektikums niedrig und die Reaktionstemperatur hoch ist, dieser Katalysator daher besonders temperaturempfindlich sein sollte. Demgegenüber zeigt es sich, daß der Katalysator zumindest kurzzeitige Temperaturerhöhungen ohne Schädigung übersteht und · daß bereits bei Temperaturen um 600 bis 800°C hohe Umsätze erreicht werden können, während die Umsetzungstemperaturen bei bekannten Katalysatoren meist um wenigstens 50°C höher liegen.

Ferner zeichnet sich der Katalysator gemäß der Erfindung gegenüber bekannten Katalysatoren dadurch aus, daß der Gehalt an $CO_2$ und $H_2O$ im Produktgas verhältnismäßig niedrig gehalten werden kann. Im Zusammenhang damit steht auch, daß der Katalysator hinsichtlich der Rußbildung besonders robust ist und keine Maßnahmen zur Rußverhinderung erfordert. Dies deutet darauf hin, daß vor allem endotherme Vorgänge katalysiert werden. Wie nämlich in DE—A—26 14 838 dargelegt ist, setzen bei der katalytischen Oxidation von Kohlenwasserstoffen unter Luftmangel bei niedrigeren Betriebstemperaturen zunächst exotherme Prozesse ein, die zu einer ersten Spaltung der Kohlenwasserstoffe führen und eine hohe Reaktionswärme aufweisen. Bei höheren Umsetzungstemperaturen setzen endotherme Folgereaktionen ein, die an einer Abnahme der Reaktionswärme erkennbar sind. Bei weiterer Steigerung der Umsetzungstemperatur setzen erneut endotherme Prozesse ein, die schließlich zur vollkommenen Durchspaltung der Kohlenwasserstoffe und zur Annäherung ans thermodynamische Gleichgewicht (Bildung von $H_2O$, $CO_2$ und Ruß) führen. Durch den Katalysator gemäß der Erfindung werden die endothermen Reaktionen bereits bei niedrigen Temperaturen eingeleitet. Es kommt zu einer besonders wirkungsvollen Unterdrückung der Rußbildung und zu geringen Gehalten an $CO_2$ und $H_2O$, wobei derartige, möglicherweise entstandene Oxidations-Endprodukte unter Umständen wieder verbraucht werden. Der Katalysator ist daher auch gegenüber einem Kontakt mit flüssigen Brennstofftröpfchen weitgehend unempfindlich.

Anhand von 8 Figuren und einem Ausführungsbeispiel wird die Erfindung weiter erläutert.

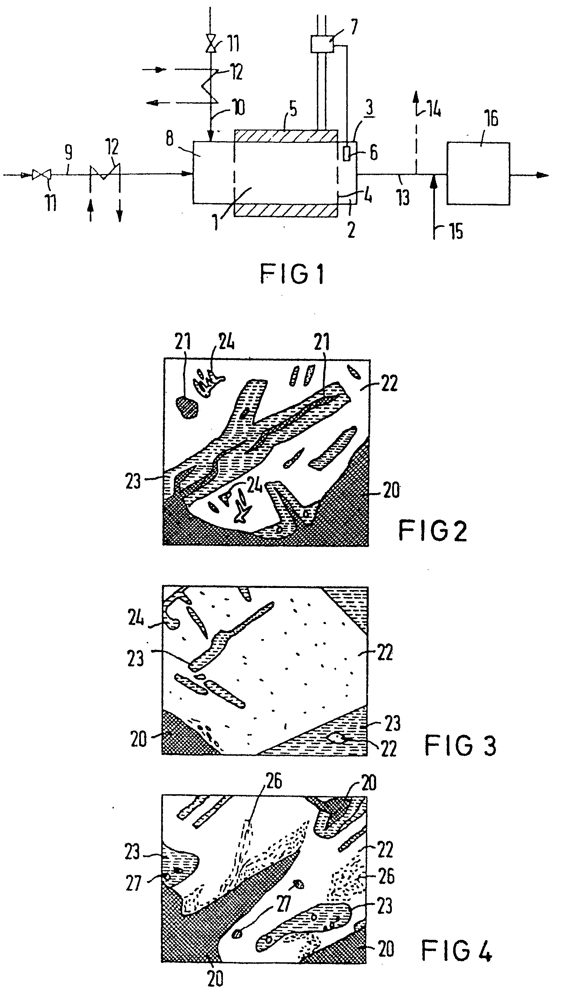

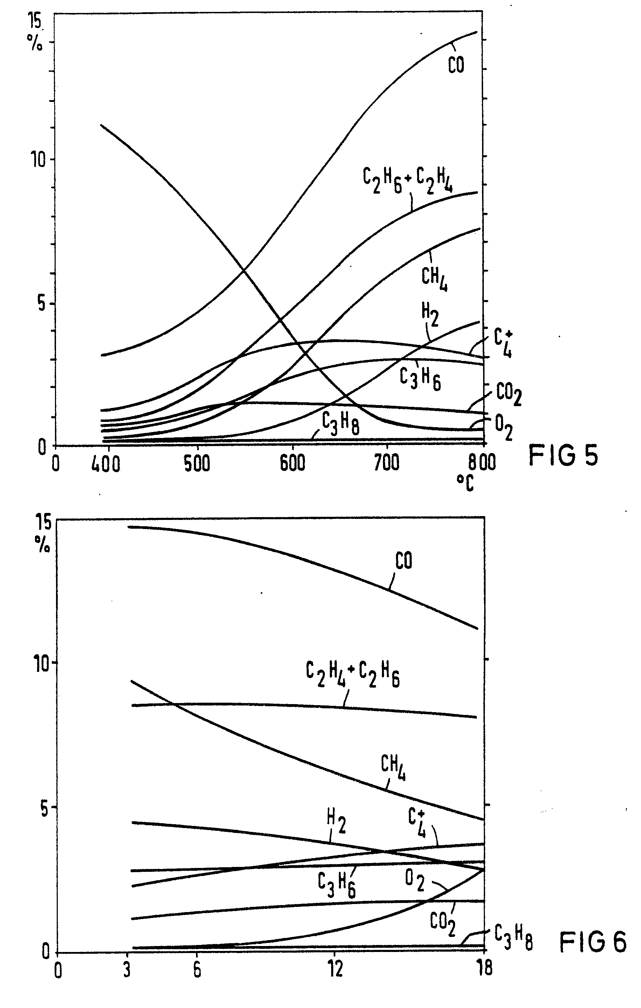

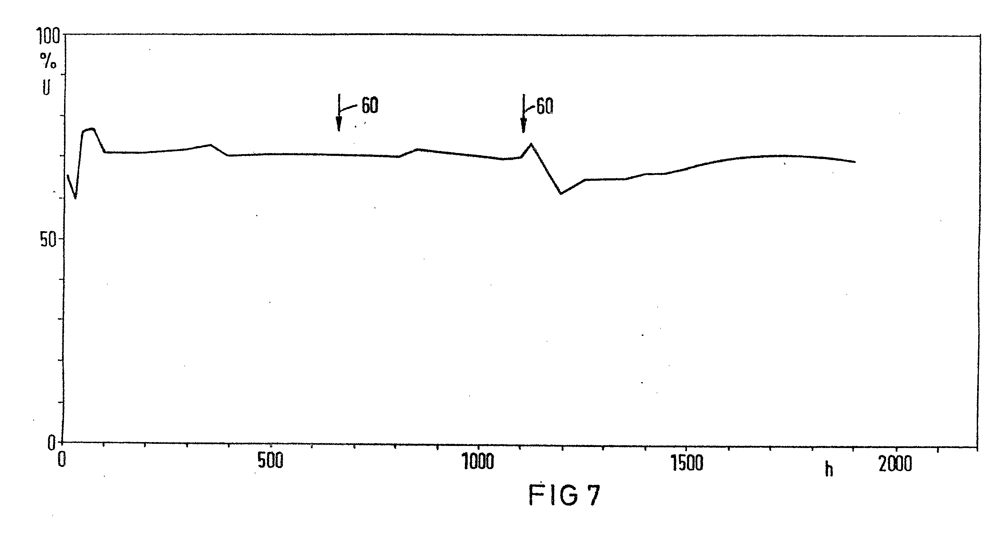

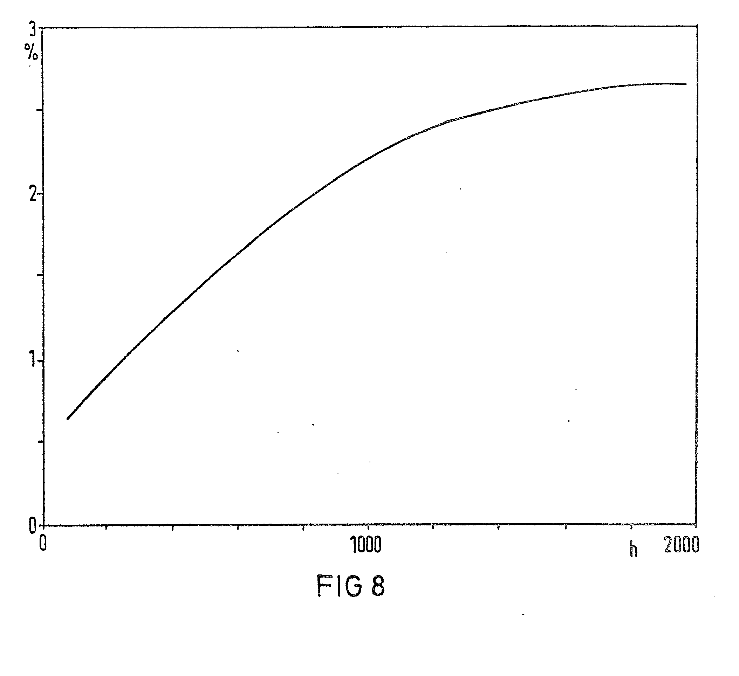

Fig. 1 stellt eine Anordnung zur Umsetzung flüssiger Kohlenwasserstoffe mit Luft und zum Betrieb einer Verbrennungseinrichtung mit dem erzeugten Brenngas dar. In Fig. 2 ist ein Schliff senkrecht zur Kante eines Al-Si-Formkörpers (Metallkörpers) gezeigt, bevor der Formkörper einem Kohlenwasserstoff/Luft-Gasstrom ausgesetzt wird. Fig. 3 zeigt einen Ausschnitt aus Fig. 2, Fig. 4 einen ähnlichen Schliff, nachdem der Formkörper dem erwähnten Gasstrom ausgesetzt war. Die Fig. 5 und 6 geben die Zusammensetzung des erzeugten Brenngases in Abhängigkeit von der Reaktionstemperatur bzw. der Katalysatorbelastung an. In den Fig. 7 und 8 ist der erzielte Umsatz und die abgelagerte Rußmenge in Abhängigkeit der Betriebszeit für einen Langzeitbetrieb dargestellt.

Die gemäß der Erfindung zur Umsetzung der Kohlenwasserstoffe verwendeten Metallkörper 1 sind im Reaktionsraum 2 eines Gasgenerators 3 angeordnet, z.B. in Form einer Schüttung, die von perforierten Platten 4 zusammengehalten wird. Der hier für Testzwecke verwendete Gasgenerator besitzt bei kleinem Schüttungsvolumen verhältnismäßig große und dicke Wände und weist daher so hohe Wärmeverluste auf, daß die zur Umsetzung benötigte Reaktionstemperatur nur durch äußere Beheizung des Reaktionsraumes aufrechterhalten werden kann. Dazu dient ein Heizmantel 5, der z.B. elektrisch mittels einer Regeleinrichtung 7 beheizt wird, die von einem im Reaktionsraum angeordneten Temperaturfühler 6 gesteuert wird. Dem Eingang des Reaktionsraumes ist ein Mischraum 8 vorgeschaltet, in den Zuführungen 9 und 10 für Kohlenwasserstoff und Luft münden. Diese Zuführungen enthalten Dosierventile 11 zur Einstellung des Kohlenwasserstoff-Durchsatzes und der vorgesehenen Luftzahlen sowie Heizvorrichtungen 12, z.B. Wärmetauscher, zur Vorheizung der Reaktionspartner. Das entstehende Brenngas kann von der Auslaßleitung 13 des Gasgenerators entweder über eine Testleitung 14 entnommen und analysiert werden, oder es wird mit Verbrennungsluft (Sekundärluft, Leitung 15) vermischt und in eine Verbrennungseinrichtung 16 gegeben. Als Verbrennungseinrichtung dient ein Haushalsbrenner, es kann aber auch einer Brennkraftmaschine, z.B. eine Kraftfahrzeugmotor oder eine Gasturbine, vorgesehen sein.

Zur Herstellung der Metallkörper wird ein handelsübliches Gußstück einer Aluminium-Silizium-Legierung zu Bruchstücken von etwa 5 mm Durchmesser gebrochen. Das vom Hersteller als "Aluminumsilicide" bezeichnete Ausgangsmaterial zeigt in der Analyse neben Aluminium 22 Gew.-% Silizium, 0,1 Gew.-% Titan, 0,1 Gew.-% Vanadium und 0,1 Gew.-% Nickel. Aluminium und Silizium liegen, soweit es in der Analyse erfaßbar ist, als Eutektikum mit Si-Primärphase vor. Für das Aluminium wurde die Gitterkonstante innerhalb der Fehlergrenzen als die Gitterkonstante des reinen Aluminiums ermittelt. In der Al-Phase ist also nur ein sehr geringer Si-Gehalt gelöst. Eine derartige Legierung wird z.B. durch langsames Abkühlen einer Schmelze der beiden Bestandteile erhalten. Das Porenvolumen der Bruchstücke betrug 0,05 bis 0,15 ml/g, wobei Proen ab einem Durchmesser von 8 nm erfaßt wurden. Der mittlere Porenradius betrug 10 nm, die Oberfläche 0,1 m²/g.

Aus dem gleichen Ausgangsmaterial wurden auch Bruchstücke anderer Si-Gehalte und anderer Porositäten erzeugt, z.B. in dem ein Teil des Aluminiums aus dem Gefüge gelöst wurde. Auch wurde durch Mahlen der Bruchstücke ein Legierungspulver hergestellt, dieses mit 2 Gew.-% Graphit als plastifizierendes Gleit- und Schmiermittel vermischt und in einer Pillenpresse und einem Druck von 750 kg/cm² kalt verpreßt. Derartige Tabletten besitzen eine wesentlich größere Porosität, zeigen jedoch im wesentlichen das gleiche katalytische Verhalten wie die zuerst erwähnten Bruchstücke, auf die sich im folgenden beschriebenen Ergebnisse beziehen.

Über diese Bruchstücke wird im Reaktor ein Gemisch aus Heizöl und Luft eingeleitet. Für einen Dauerversuch wurde Heizöl "extra leicht", Dichte 0,85, C-Gehalt 85,7 Gew.-%, verwendet, jedoch kann (z.B. zum Betrieb eines Brenners) auch mittleres und schwereres Heizöl (Dichte 0,92 bzw. 0,98, C-Gehalt 85,3 bzw. 84,9 Gew.-%) verwendet werden. Auch die Spaltung von unverbleitem Rohbenzin ("straight run"-Benzin) wurde im Hinblick auf den Betrieb einer nachgeschalteten Brennkraftmaschine mit Erfolg durchgeführt.

Das Heizöl wurde auf etwa 415°C vorgeheizt, die Luftzahl des Gemisches zu $0,09 \pm 0,01$ eingestellt. Die Belastung der Reaktorfüllung betrug 12 l Heizöl pro Liter Schüttvolumen und Stunde.

Vor der ersten Inbetriebnahme des Reaktors wurde eine Probe der Metallkörper entnommen und röntgenographisch, analytisch und im Schliff mit der Mikrosonde und dem Lichtmikroskop untersucht. Die Fig. 2 und 3 zeigen den lichtmikroskopischen Befund.

Vor dem dunklen Hintergrund 20 sind vereinzelte Risse und Poren 21 im Material erkennbar. Die Hauptmasse besteht aus der hellen Phase 22 des stark aluminiumhaltigen Eutektikums. Darin eingelagert sind nadel- oder balkenförmige Kristalle 23, die sich als die Primärphase des Siliziums erweisen. Als Verunreinigung findet sich ferner vereinzelt eine hellgraue eisenhaltige Phase 24, deren Zusammensetzung etwa der intermetallischen Verbindung $Al_9Fe_2Si_2$ entspricht und schwach Mn- und Nihaltig ist. Die beiden letztgenannten, auch analytisch festgestellten Verunreinigungen finden sich in äußerst geringer Verteilung auch in den anderen Bereichen des Werkstoffes.

Nach 12 Stunden wurde eine weitere Probe der Metallkörper entnommen und auf gleiche Weise analysiert.

Das sich ergebende Schliffbild (Fig. 4) läßt wieder deutlich die helle, stark aluminiumhaltige Phase 22 und die eingelagerte graue Si-Phase 23 erkennen. Daneben werden sehr feinkörnige Bereiche 26 beobachtet, in denen Sauerstoff enthalten ist. Es zeigt sich, daß es sich hierbei um eine sehr feinkörnige $\alpha$-$Al_2O_3$-Phase mit Einlagerungen verschiedener Bestandteile, hauptsächlich Aluminium und Silizium, handelt. Vor allem in den Randbereichen der Partikel treten ferner mittelgraue, kleine Ausscheidungen 27 auf, die als SiC identifiziert wurden. Der Katalysator ist jetzt für den Dauerbetrieb formiert.

Weitere Untersuchungen nach 200 bis 2000 Betriebsstunden zeigen, daß sich mit zunehmenden Betriebsdauern, in denen sich die Aktivität des Katalysators nicht mehr wesentlich ändert, die Ausbildung von $Al_2O_3$-haltigen Bereichen allmählich verstärkt. Der Aufbau dieser Bereiche ist sehr inhomogen. Teils liegt das Oxid in nahezu reiner $\alpha$-Form vor, häufig ist es von verschiedenen Gefügebestandteilen in äußerst feiner Verteilung durchsetzt. Dabei treten sowohl Si und SiC-haltige wie auch stark Al-haltige Gefügebestandteile auf. Daneben sind auch die stark Al-haltigen Eutektikum-Teilchen von einer dunkelgrauen, $Al_2O_3$-haltigen Schicht umgeben. Dazwichen finden sich Teilchen, die überwiegend aus Si bestehen und dunkelgraue $Al_2O_3$-Ausscheidungen sowie mittelgraue $\beta$-SiC-Ausscheidungen enthalten. Anhäufungen dieser Ausscheidungen treten vor allem in den Randbereichen der Partikel und entlang der Risse und Poren auf. Mit zunehmender Betriebsdauer scheint die Größe der SiC-Ausscheidungen sehr langsam zu wachsen. Ferner konnte festgestellt werden, daß in den Poren (sowohl in den Poren innerhalb der oxidischen Randzonen als auch in den Poren im Partikelinneren) geringe Mengen Schwefel angereichert sind.

Prinzipiell die gleichen Ergebnisse wurden auch bei Verwendung von n-Heptan und Dieselöl erhalten.

Mehrmals gelangte infolge einer Betriebsstörung Luft im Überschuß in den Reaktionsraum. Obwohl ein Lufteinbruch mit Temperaturen verbunden ist, die erheblich über dem Schmelzpunkt des Eutektikums liegen, wurde überraschenderweise ein Zusammensintern oder andere Veränderungen der Katalysatorstruktur praktisch nich festgestellt. Es fanden sich lediglich an der Oberfläche durch Schmelzen und Erstarren geringfügig verrundete Bereiche. Offenbar verleiht das gebildete $Al_2O_3$ und SiC wie eine hochwarmfeste Matrix den Metallkörpern eine erhöhte Strukturstabilität.

In Fig. 5 ist die Gaszusammensetzung in Abhängigkeit von der Reaktionstemperatur angegeben, wenn Heizöl "extra leicht" mit einer Belastung von 12 l pro Liter Schüttvolumen und Stunde bei Luftzahlen um 0,09 im Reaktionsraum umgesetzt wird. Die Gasgehalte sind angegeben in Volumenprozent, bezogen auf das entstehende Gasvolumen (ohne kondensierbare, nichtumgesetzte Kohlenwasserstoff-Reste). Der Rest ist Stickstoff.

Entsprechend dem mit steigender Reaktionstemperatur steigenden Umsatz wird ein zunehmender Anteil des zugesetzten Luftsauerstoffes zur Bildung von Kohlenmonoxid verbraucht, wobei nur eine geringe Menge $CO_2$ entsteht. Neben Wasserstoff wird Methan sowie $C_2$- und $C_3$-haltige Kohlenwasserstoffe und ein als $C_4^+$ bezeichneter, bezüglich seines Wasserstoffgehaltes nicht unterschiedener Anteil erzeugt. Bemerkenswert ist, daß die Entstehung von Acetylen, das bei diesen Temperaturen instabil ist und unter Rußbildung zerfallen würde, nicht beobachtet wurde.

Fig. 6 zeigt die gleichen Gasanalysen bei Einstellung einer konstanten Reaktionstemperatur von 750°C und verschiedenen Katalysatorbelastungen. Mit zunehmendem Durchsatz nimmt zwar die Umsetzung ab, was an der Abnahme des CO-Gehaltes und an der Zunahme des Gehaltes an unverbrauchtem Sauerstoff erkennbar ist, jedoch ist das entstehende Gasgemisch, in dem ein Teil der eingesetzten flüssigen Kohlenwasserstoffe als nicht oder nur teilweise umgesetzter, lediglich verdampfter Brennstoff enthalten ist, auch bei so hohen Katalysatorbelastungen von 18 l/l· Std. für die meisten Anwendungen noch geeignet.

In Fig. 7 ist der Anteil des eingesetzten flüssigen Brennstoffes, der in unter Normalbedingungen gasförmige (niedrige) Kohlenwasserstoffe umgesetzt wurde, in Abhängigkeit von den Betriebsstunden dargestellt. Die Luftzahl betrug etwa 0,09, die Katalysatorbelastung 12 l/l · Std., die Katalysatortemperatur 750°C. Zunächst wurden die unbehandelten (d.h. einem Kohlenwasserstoff/Luft-Gasstrom nicht ausgesetzten) Metallkörper in den Reaktor eingefüllt. Nach den ersten 12 Betriebsstunden hat sich der Katalysator zu der im Zusammenhang mit Fig. 4 beschriebenen Struktur formiert. Nach anfänglichen Schwankungen stellt sich ein Umsetzungsgrad von etwa 70% ein. Mit den Pfeilen 60 sind die erwähnten Lufteinbrüche in den Katalysator bezeichnet. Beim ersten Lufteinbruch blieb der Umsetzungsgrad praktisch konstant, nach dem zweiten Lufteinbruch zeigt sich eine vorübergehende Abnahme auf etwa 60%, auf die jedoch ein langsamer Anstieg auf den vorangegangenen Wert folgt.

In diesen Kurven sind unzählige Ein- und Ausschaltungen der Anlage enthalten. Beim Ausschalten mußten keine besonderen Maßnahmen getroffen werden, um den sich nur langsam abkühlenden Katalysator vor einströmender Luft zu schützen. Das Starten bei kälter Reaktorfüllung geschah, indem das Heizöl elektrisch verdampft und auf maximal 415°C erhitzt, die äußere Beheizung des Reaktors eingeschaltet und zusätzlich die Vergasungsluft auf 560° elektrisch vorgewärmt wurde. Nach spätestens 8 Minuten konnte die Heizung der Vergasungsluft abgeschaltet werden, da die Heizleistung der äußeren Reaktorbeheizung ausreichte, um eine stabile Reaktionstemperatur von 750° aufrechtzuerhalten. Diese verhältnismäßig lange Startzeit kann verkürzt werden, z.B. indem die Luftzahl erhöht und im Reaktor eine stärker exotherme Umsetzung mit entsprechend hoher Reaktionswärme durchgeführt wird. Um die Eignung der Al-Si-Metallkörper für die Umsetzung bei geringen Luftzahlen zu erproben, wurde jedoch auf derartige Zusatzmaßnahmen im Rahmen dieser Testversuche verzichtet.

Wie bereits erwähnt wurde, kann eine Bildung von geringen Rußmengen am Katalysator nachgewiesen werden. Fig. 8 zeigt die am Katalysator abgelagerte Rußmenge in Gewichtsprozent, bezogen auf das Gewicht der frischen Metallkörper. Selbst nach 2000 Betriebsstunden lag die Rußbildung unter 3%. Der Ruß ist dabei nicht sichtbar, sondern vermutlich in den Poren abgelagert. Parallel zur Rußbildung wurde auch eine geringfügige Adsorption von Schwefel in den Poren der Metallkörper festgestellt. Weder Ruß noch Schwefel beeinträchtigen jedoch die Aktivität des Katalysators. Insbesondere kann der Katalysator auch stärker schwefelhaltige Brennstoffe umsetzen. Dabei kommt es weder im Brenngas noch im Abgas der mit dem Brenngas gespeisten Verbrennungseinrichtung zur Bildung von $SO_3$ oder anderen schädlichen Schwefeloxiden.

**Patentansprüche**

1. Trägerloser Metallkatalysator zur rußfreien Erzeugung eines Kohlenmonoxid, Wasserstoff und gasförmige Kohlenwasserstoffe enthaltenden Brenngasgemisches durch partielle Oxidation von flüssigen Kohlenwasserstoffen mit Luft bei Luftzahlen unter 0,3 und Temperaturen zwischen 600 und 800°C, dadurch gekennzeichnet, daß der Metallkatalysator hergestellt ist, indem eine Aluminiumlegierung mit 15 bis 35 Gew.-% Silizium zu Formkörpern verarbeitet und in einer Wärmebehandlung mindestens 10 Stunden lang bei Temperaturen zwischen 600 und 800°C einer oxidierenden Atmosphäre zur Überführung von 5—30% des vorhandenen Aluminiums in $\alpha$-$Al_2O_3$ und gasförmigen oder vergasten Kohlenwasserstoffen zur Überführung von 1—10% des Siliziums in $\beta$-SiC ausgesetzt wird.

2. Metallkatalysator nach Anspruch 1, dadurch gekennzeichnet, daß die Wärmebehandlung in einem Gasstrom aus Kohlenwasserstoffen und Luft im $C:O_2$-Verhältnis zwischen 2 und 8 vorgenommen wird.

3. Metallkatalysator nach Anspruch 2, dadurch gekennzeichnet, daß das $C:O_2$-Verhältnis zwischen 4 und 6,5 beträgt.

4. Metallkatalysator nach einem der Ansprüche 1 bis 3, dadurch gekennzeichnet, daß der Siliziumgehalt 20 bis 25 Gew.-% beträgt.

5. Metallkatalysator nach einem der Ansprüche 1 bis 4, dadurch gekennzeichnet, daß die Formkörper durch Mischen eines Legierungspulvers der Aluminiumlegierung und Schmiermitteln und anschließendes Formpressen hergestellt sind.

**Claims**

1. An unsupported metal catalyst for the soot-free production of a combustible gas mixture containing carbon monoxide, hydrogen and gaseous hydrocarbons, by the partial oxidation of liquid hydrocarbons with air at air numbers below 0.3 and temperatures of between 600 and 800°C, characterised in that the metal catalyst is produced by a process in which an aluminium alloy having 15 to 35% by weight of silicon is processed to form moulded bodies and subjected to a heat treatment for at least 10 hours at temperatures between 600 and 800°C in an oxidising atmosphere to convert 5—30% of the aluminium present into a $\alpha$-Al$_2$O$_3$, and in the presence of gaseous or vaporised hydrocarbons to convert 1—10% of the silicon into $\beta$-SiC.

2. A metal catalyst as claimed in Claim 1, characterised in that the heat treatment is carried out in a gas stream consisting of hydrocarbons and air with a C:O$_2$-ratio of between 2 and 8.

3. A metal catalyst as claimed in Claim 2, characterised in that the C:O$_2$-ratio is between 4 and 6.5.

4. A metal catalyst as claimed in one of Claims 1 to 3, characterised in that the silicon content is 20 to 25% by weight.

5. A metal catalyst as claimed in one of Claims 1 to 4, characterised in that the moulded bodies are produced by mixing the aluminium alloy in powdered form and lubricants and subsequent compression moulding.

## Revendications

1. Catalyseur métallique sans support pour la production, sand suies, d'un mélange gazeux combustible contenant du monoxyde de carbone, de l'hydrogène et des hydrocarbures gazeux, par oxydation partielle d'hydrocarbures liquides, avec de l'air, à des indices d'air inférieurs à 0,3 et à des températures situées entre 600 et 800°C, caractérisé par le fait que le catalyseur métallique est fabriqué en transformant un alliage d'aluminium à 15 à 35% en poids de silicium en pièces conformées et est soumis durant un traitement thermique d'au moins 10 heures, à des températures entre 600 et 800°C, à une atmosphère oxydante pour la transformation de 5—30% de l'aluminium présent en $\alpha$-Al$_2$O$_3$ et à des hydrocarbures gazeux ou gazéifiés pour la transformation de 1—10% du silicium en $\beta$-SiC.

2. Catalyseur métallique selon la revendication 1, caractérisé par le fait que le traitement thermique est réalisé dans un courant gazeux constitué par des hydrocarbures et par de l'air dans un rapport C:O$_2$ situé entre 2 et 8.

3. Catalyseur métallique selon la revendication 2, caractérisé par le fait que le rapport C:O$_2$ se situe entre 4 et 6,5.

4. Catalyseur métallique selon l'une des revendications 1 à 3, caractérisé par le fait que la teneur en silicium est de 20 à 25% en poids.

5. Catalyseur métallique selon l'une des revendications 1 à 4, caractérisé par le fait que les pièces conformées sont fabriquées en mélangeant une poudre d'alliage de l'alliage d'aluminium et de substance lubrifiante et en procédant ensuite au moulage.

0 008 745

FIG 1

FIG 2

FIG 3

FIG 4

FIG 5

FIG 6

FIG 7

FIG 8